# EUROPEAN PATENT APPLICATION

(11) **EP 1 657 853 A1**
(43) Date of publication of application: **17.05.2006**
(21) Application number: 04257037.4
(22) Date of filing: 12.11.2004
(51) Int. Cl.: H04L 12/28

(54) **Roaming network stations using a MAC address identifier to select a new access point**

(71) Applicant: STMicroelectronics (Research & Development) Limited, Marlow, Buckinghamshire SL7 1YL (GB)
(72) Inventor: Moreton, Michael John Vidion, Wilts SN8 1BT (GB)
(74) Representative: Palmer, Jonathan R.

(57) **Abstract**

There is disclosed a method of helping mobile stations such as voice over IP devices to roam between wireless access points, by each access point transmitting the MAC address of a spanning tree algorithm root switch of the local network domain. This MAC address is used by mobile stations to detect if two access points are in a common network domain.

## Description

### Field of the invention

The present invention relates to network stations moving between network access points, and in particular, but not exclusively, to the roaming of stations, such as voice over IP devices or laptop computers, communicating over wireless connections in an IP network environment.

### Discussion of the Prior art

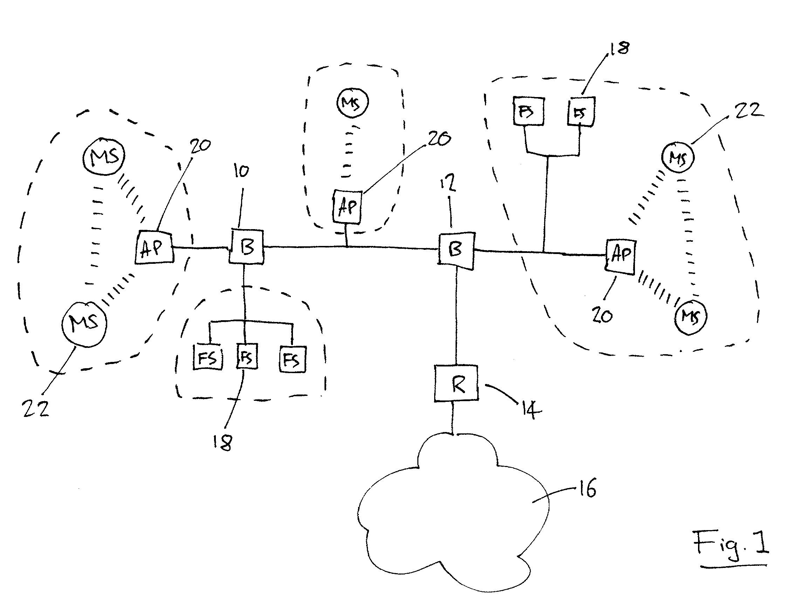

Figure 1 illustrates elements of data network, and in particular of a single network domain. Four network segments are indicated by broken lines. The network segments are interconnected by bridges 10 and 12. A router 14 provides a connection between bridge 12 and other networks such as the wider Internet 16. The solid connections of the network are provided by Ethernet, while the broken lines are provided by wireless connections, for example, operating under an IEEE 802.11 protocol.

The term "network domain" is intended to refer to a collection of network elements communicating directly, without intervening routers, at the second "data link" layer of the OSI model or similar protocol layer models, typically using a flat addressing scheme. A network domain may therefore also be referred to as a layer 2 network, in contrast to a layer 3 network which uses a hierarchical addressing scheme such as IP. Each subnet of a layer 3 network is generally implemented using a separate underlying layer 2 network.

The bridges 10 and 12 divide the illustrated network into network segments so as to reduce the total amount of network traffic at any one point and thereby reduce the load on the network components. Typical bridges are designed to learn automatically which network messages need to be passed between segments and which messages do not.

Two of the network segments include static or fixed stations 18, such as desktop computers. Three of the network segments include wireless access points 20 which enable mobile stations 22 to connect with the rest of the network. The router, the bridges and any other devices providing message switching functions within the network may be referred to as network switches. The wireless access points may operate as switches to control the movement of messages into and out of the wireless environment.

Typically, all of the network components illustrated in figure 1 will reside on the same IP subnet connected to other subnets via the router 14, and each mobile station 22 will operate using a static or dynamically allocated IP address belonging to that subnet. As a mobile station 22 moves it may wish or need to disconnect from one access point and connect to another. This may be handled smoothly if both access points are in the same network domain. This is because the IP address of the mobile station will remain valid because the mobile station 22 can still access the other subnets via the same router. However, should the new access point belong to a new network domain then the IP address of the mobile station will not be valid because the previous router 14 cannot be accessed, and any established network session will be interrupted.

Sometimes a network domain such as that illustrated in figure 1 may contain two IP subnets running concurrently, for example, by means of two different routers providing connections to the external network 16.

It would be desirable to enable a mobile station to recognise whether or not an access point is on the same network domain as the one to which it is currently connected, so that the mobile station can preferably select an access point on the same network domain and minimise service disruption. Wireless access points already transmit, in probe response and broadcast beacon messages, a service set identifier (SSID) identifying the local wireless network. However, an organisation with multiple wireless networks will in general use the same SSID for all networks, so it is not useful for distinguishing between them.

The invention seeks to address these and other problems of the related prior art.

### Summary of the invention

The invention provides a method of enabling stations to roam between network access points, in which each access point belongs to a network domain. A separate spanning tree algorithm is operated within each network domain, and switches in a particular network domain are aware of the spanning tree algorithm root switch for that network domain. Each access point then receives the MAC address of the root switch, or another unique physical network identifier for the network domain, and transmits this information for reception by said stations.

Since the MAC address of the root switch is globally unique, yet the same for the whole network domain on which a particular instance of a spanning tree algorithm is being used, a mobile station roaming between access points can use the received root switch MAC address to identify whether a second access point is on the same network domain as a first access point, and use this information in controlling its own roaming process.

The access points may be wireless access points communicating with the mobile stations using a wireless protocol such as an 802.11 protocol, but may also be physical plug and socket access points or similar. The switches in the network may be connected using Ethernet protocols or similar.

Suitable unique network domain identifiers other than the spanning tree root switch MAC address may be used. For example, a different algorithm which identifies the MAC address of a unique element of a network domain may be used to derive an identifier.

The invention also provides a network, an access point and a mobile station to put into effect the above method.

### Brief description of the drawings

Embodiments of the invention will now be described by way of example only, with reference to the drawings, of which:
Figure 1 shows an example prior art network combining Ethernet and wireless connections;
Figure 2 illustrates the need for a spanning tree protocol in a network domain;
Figure 3 shows the flow of a root switch identity in the network of figure 2; and
Figure 4 illustrates aspects of a wireless access point and a mobile station embodying the invention.

### Detailed description of preferred embodiments

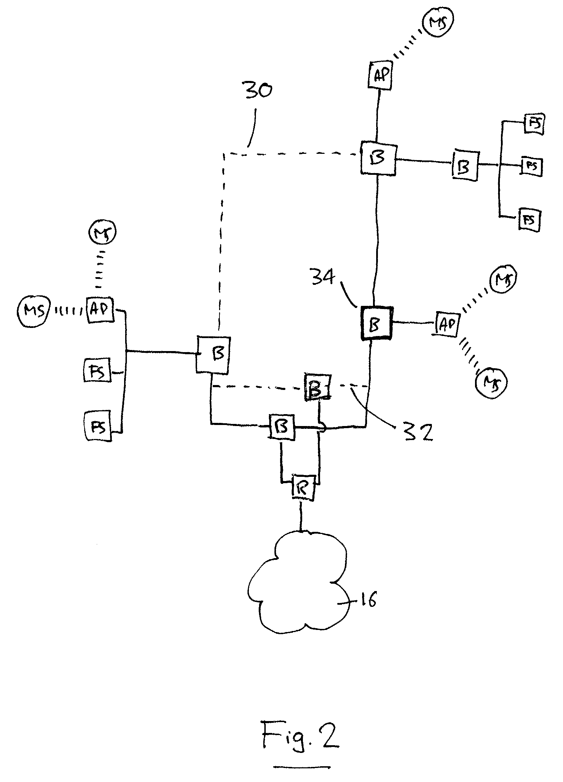

Referring now to figure 2 there is shown a network which is built using a router, bridges, fixed stations, access points and mobile stations in the same way as the network of figure 1. However, this network contains a network link 30 that joins two bridges in such a way that a closed loop in the network is formed. A further bridge link 32 duplicates a link provided by an adjacent bridge, for example in case the duplicated bridge fails.

Multiple paths linking one network segment to another can cause various problems such as infinite message looping. To avoid these problems, while retaining the benefits of increased network connectivity and robustness, the bridges and other switches communicate with each other to implement a spanning tree algorithm or protocol, for example as defined in IEEE Standard 802.1D. This protocol is used to avoid transmission on selected links, such as links 30 and 32 illustrated in figure 2, until such time as a change in the network allows or requires them to be reactivated.

The switches in a sub network operating under a spanning tree protocol gather information on other switches in the sub network through an exchange of data messages in the form of bridge protocol data units. This exchange of messages results in the election of a root switch for a spanning tree network topology. In figure 2, bridge 34 has been selected as the root switch. The identity of the root switch may be changed from time to time by the spanning tree protocol, for example to adapt to physical changes in the network, but in practice such changes are rare.

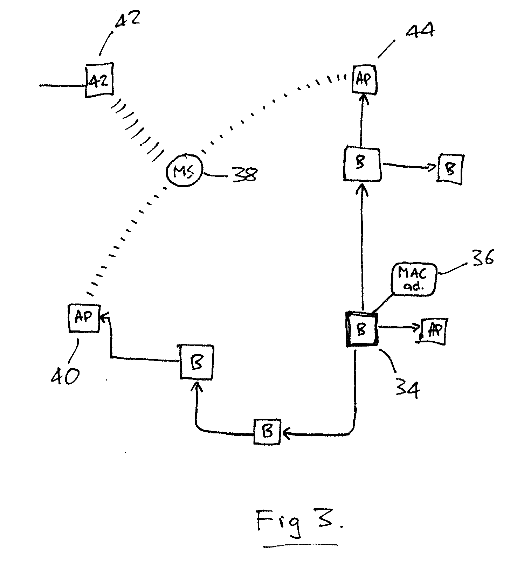

Figure 3 illustrates an embodiment of the invention set in the context of the network of figure 2. For clarity, only the active connections between the bridges and wireless access points are shown. An additional access point 42 is located on a different network domain to the rest of the illustrated components. Each active element in the network, and in particular each bridge, has a physical network address, or MAC (media access control) address. For example, for an Ethernet connection this is an Ethernet address. The MAC address 36 of the bridge selected as root switch 34 is transmitted, under the spanning tree protocol, to each of the other bridges, as illustrated by the arrows on the network connections, and can be read by the wireless access points, even if they are not configured to join in the spanning tree protocol, as long as they can extract the root switch MAC from the appropriate network messages.

The access points then include the root switch MAC address 36 in their wireless transmissions, including for example in probe responses and beacon broadcasts. Each MAC address is globally unique, so there is no chance of two different root switches having the same MAC address.

The mobile stations are configured to read the root switch MAC address from the access point transmissions and use this information in roaming functions to determine if a second access point is in the same network domain as a first access point. For example, when mobile station 38 may wish to disconnect from a present access point 40 and connect to a new access point, it checks whether the root switch MAC address is the same for both the present and new access points, and if so, concludes that the two access points are on the same network domain. This information may be used by the mobile station to decide whether or not to roam from the present to the new access point, or to decide which of two or more new access points 42,44 it should connect to. For example, the information may be used to avoid roaming to an access point 42 which resides on a different network domain.

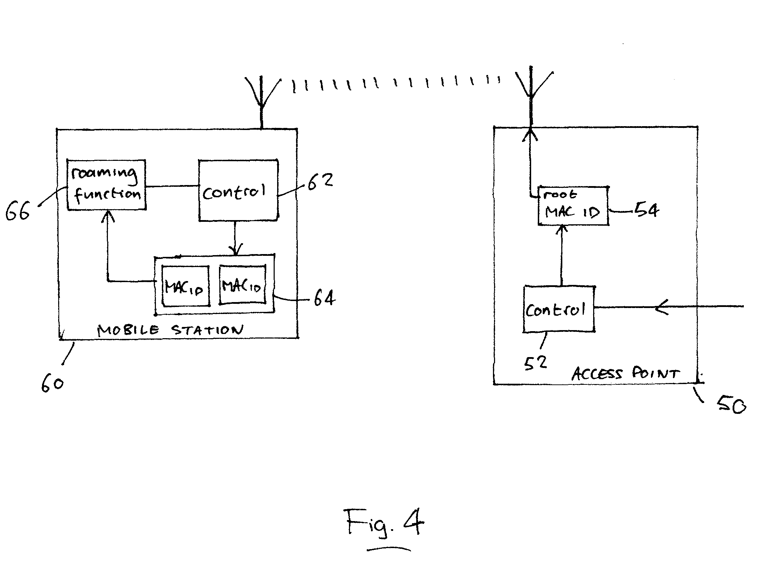

Figure 4 illustrates in more detail an access point 50 and a mobile station 60 embodying the invention. A control process 52 in the access point reads spanning tree protocol messages from the network, extracts the MAC address of the spanning tree root switch and stores this in a memory 54. The control process causes this root MAC address to be transmitted to mobile station 60.

A control process 62 in mobile station 60 reads the root MAC address from the transmissions made by the access point 50 and stores it in a memory 64. The MAC IDs received from other access points to which the mobile station could connect are also stored in the memory 64. From time to time a roaming function 66 reads the MAC IDs from the memory 64 for use in determining to which new access point a roaming transfer may be made.

As mentioned above, a spanning tree protocol may sometimes cause the identity of the root switch to change, for example to adapt to changes in the state or topology of the network. In practise, this happens only rarely, but to allow for this possibility, the mobile stations are programmed such that there is no firm assumption that a change in root switch MAC address is caused by a change in network domain. In fact, when the apparent root switch MAC address changes, there is no disadvantage over prior art systems in a mobile station going through a conventional roaming procedure, for example by pinging a router to establish whether it is still accessible.

If a spanning tree protocol is not being used in a particular network domain then an access point according to the invention will not receive any spanning tree protocol messages, so will not know the MAC address of the root switch. Thus, this information will not be broadcast to the mobile stations which will then use a conventional roaming procedure.

Although embodiments of the invention have been described in which the MAC address of a root switch node is used as a network domain identification tag, the network elements may provide a facility for setting a different, for example a user selected network domain identification tag. Other network domain identification tags may also be used, for example other MAC level or level 2 network identifiers.

## Claims

1. A method of enabling stations (38) to roam between network access points (40,42,44), each access point belonging to one of a plurality of network domains, comprising the steps of:
for each network domain, providing a unique domain identifier (36) and transmitting said identifier across the domain for reception by said access points;
each access point transmitting said identifier for reception by said stations;
at a station, receiving identifiers from at least first and second access points; and
at said station, comparing said received identifiers to determine if the first and second access points are in the same network domain.

2. The method of claim 1 further comprising, if the first and second access points are on the same network domain, deciding to roam from the first access point (40) to the second access point (44).

3. The method of claim 1 or 2 further comprising, if the first and second access points are not on the same network domain, deciding not to roam from the first access point (40) to the second access point (42).

4. The method of any preceding claim wherein two access points transmitting the same identifier are always on the same network domain.

5. The method of any preceding claim wherein two access points transmitting different identifiers are on different network domain.

6. The method of any preceding claim further comprising operating an algorithm for each network domain such that each domain contains a unique network element (34); and
transmitting a MAC address (36) of the unique element across the domain as the unique domain identifier.

7. The method of claim 6 wherein the algorithm is a spanning tree algorithm and the unique element is the root switch identified by the spanning tree algorithm.

8. The method of any preceding claim wherein the access points are wireless access points communication with the mobile stations using wireless connections.

9. The method of claim 8 wherein each access point transmits said unique domain identifier by including the identifier in beacon transmissions and probe response frames.

10. A network comprising:
a plurality of network domains, each domain having a unique domain identifier;
a plurality of mobile stations (38);
in each network domain, at least one access point (40,44), each access point being adapted to transmit said identifier for reception by said mobile stations,
each station being adapted to receive identifiers from first and second access points and to compare said identifiers to determine if said first and second access points are in the same network domain.

11. The network of claim 10 wherein each network domain is arranged to operate a spanning tree algorithm so as to elect a root switch for that domain, the unique subset identifier being an identifier uniquely associated with the root switch.

12. The network of claim 11 wherein the identifier is a MAC address of the root switch.

13. The network of claim 12 in which the MAC address is an Ethernet address of the root switch.

14. The network of any of claims 10 to 13 wherein the access points are wireless access points providing wireless connections to the mobile stations.

15. A wireless mobile station adapted to receive unique network domain identifiers from at least first and second wireless access points, and to compare the identifiers to determine if the first and second access points are on the same network domain.

16. The wireless mobile station of claim 15 wherein each unique network domain identifier is a MAC address of a root switch determined by a spanning tree algorithm operating on that network domain.

17. The wireless mobile station of claim 14 wherein each unique network domain identifier is a level 2 network identifier for at least one component of the network domain.

18. A wireless access point for use in any one of a plurality of network domains, adapted to receive from a said domain a unique domain identifier and to transmit said identifier to mobile stations for determining if two different access points are on the same network domain.

19. The wireless access point of claim 18 wherein the identifier is a MAC address of a root switch determined by a spanning tree algorithm operating on that network domain.

20. The subject matter of any preceding claim wherein the network domains implement subnets of a commonly addressed IP network, each subnet being associated with a separate set of IP addresses.

21. The subject matter of any preceding claim wherein each network domain corresponds to a layer 2 network.

22. A method of enabling mobile stations to roam between wireless network access points, each access point belonging to a domain of a network, comprising the steps of:
operating a spanning tree algorithm on each domain such that access points in a common domain are aware of a single root switch for that domain; and
each access point transmitting a MAC address of the root switch for reception by said mobile stations.
